# EUROPEAN PATENT SPECIFICATION

(11) **EP 2 845 833 B1**
(45) Date of publication and mention of the grant of the patent: **11.07.2018**
(21) Application number: 13785004.6
(22) Date of filing: 02.05.2013
(51) Int. Cl.: B66C 19/00, B65G 67/60, B65G 63/00

(54) **SYSTEM FOR LOADING AND UNLOADING DURING PORT OPERATIONS, COMPRISING A CRANE, AND A BASE LOCATED IN THE BODY OF THE CRANE THAT SUPPORTS AND STACKS HATCHWAY COVERS**
SYSTEM ZUM BE- UND ENTLADEN WÄHREND EINES HAFENBETRIEBS MIT EINEM KRAN UND EINER BASISSTATION IM KRAN ZUR STÜTZE UND STAPELUNG VON LADELUKENABDECKUNGEN
SYSTÈME DE CHARGEMENT ET DE DÉCHARGEMENT LORS D'OPÉRATIONS PORTUAIRES, COMPRENANT UNE GRUE ET UNE BASE SITUÉE DANS LE CORPS DE LA GRUE QUI SOUTIENT ET EMPILE LES CAPOTS DE TRAPPE

(30) Priority: 04.05.2012 CL 20121183 U
(43) Date of publication of application: 11.03.2015
(73) Proprietor: Bobenrieth Giglio, Guillermo, 7561127 Santiago (CL)
(72) Inventor: Bobenrieth Giglio, Guillermo, 7561127 Santiago (CL)
(74) Representative: ZBM Patents - Zea, Barlocci & Markvardsen
(86) International application number: PCT/CL2013/000027
(87) International publication number: WO 2013/163774

(56) References cited:
- WO-A1-96/09242
- US-A- 3 812 987
- US-A- 4 599 027
- US-A- 5 456 560
- US-A- 5 538 382
- US-A1- 2002 044 854
- US-A1- 2008 219 804

## Description

### Field of the Invention

The invention is related with the tasks of loading and unloading of ships or boats, and is specifically related with the procedure for removal of the hatch covers to allow access or exit of the cargo to the holds of the maritime vessels.

The invention consists of a system of loading, unloading and supporting the hatch covers, which comprises a crane and a base for stacking the hatch covers of the ship, so that these covers are not stockpiled somewhere else that it can be used for other operation.

### Background of the Invention

The holds of ships or boats are the space inside the hull which is used to hold the cargos that are transported. The opening that allows access to the hold for introducing or removing the cargos is the hatch, which in most cases is on the deck of the ship which is the upper outer surface of the hull. When the ship sails these hatches must be closed, both to protect the cargo, and to maintain the water-tightness of the ship and so to not allow water to enter the holds filled with water. The element that closes the hatch is called the hatch cover and should be tight enough so as not to allow water to enter which eventually passes on the deck of the ship during navigation.

During the tasks of loading and unloading of the ships the hatch covers have to be removed from the hatches to allow access or egress of the cargo to the holds. Some ships are equipped with devices for opening and closing the hatch and have sufficient space to retain the hatch cover on the ship once it is removed from the hatch; while other ships neither have the space nor have the devices that will allow them to retain the covers on them, so they must be removed and placed elsewhere, which in most cases is the surface of the docks, breakwaters or rafts used for loading or unloading of the goods.

When hatch covers have to be removed from the boats and arranged on the surface of the docks, breakwaters or rafts or any other surface which is used for this purpose and which is not the ship, the area used may have alternative uses such as gathering the cargos or the transit of the equipment transfer or transportation of goods. In some cases these areas may be critical for efficient operation of transfer and portage (transport of cargo within the port or maritime terminal) of the cargos.

In view of the above, it is necessary to have a place to put the hatch cover, which is other than the surface of the docks, breakwaters or rafts, and which has easy accessibility and adequate capacity. In this way, the hatch covers of the ship would not occupy the area of operation where the cargo or other items can be gathered, used for the transit of the portage equipment or to locate the transfer equipments.

The applicant has developed a system to store or stack the hatch covers, within the same crane that performs the loading and unloading of the goods contained in the holds of ships
The document US5538382 describes a system consisting of a crane that has a variable level suspended platform lift type having a mechanism for lifting, wherein said platform is for the transport of the cargo.

The document US4858775 describes a platform lift for the load of a container, which includes its own circulation engines motion to have autonomy of movement along the crane boom.

From the state of the art it can be seen that although there exist platforms associated with loading cranes, these platforms are with elevator movement and are installed on the cranes to assist with the loading and unloading processes in the maritime operations.

Document US2008/0219804 describes a crane comprising a fixed platform for receiving hatch covers located on a platform bearing structure that is built into the overall structure of the crane. Document WO96/09242 describes a handling plant able to transfer hold covers from the holds to a support provided within a top of a longitudinal frame of the handling plant.

Document US3812987 discloses a container loading and unloading method in which a buffer is provided between a container crane and a rear conveyance facility on a container crane so that some of the containers may be deposited upon said buffer when the containers are transferred from the container crane to the container carriage or vice versa.

Document US2002044854 describes a loading device for ISO containers in a container terminal with a container bridge for the loading and unloading of ships and with automatic incoming and outgoing transfer of the containers by means of automatic guided vehicles.

The objective of the present invention is to provide alternative means for gathering the hatch covers, so that the hatch covers are not stacked or stored on the surface of the docks, breakwaters or rafts used for loading or unloading of the goods.

### Summary of the Invention

The present invention corresponds to a system for loading, unloading in port operations and for supporting hatch covers comprising a crane for loading and unloading of maritime operations and a base located in the body of the crane to hold and stack the hatch covers.

The defined objective is achieved by the provision of a system according to claim 1 and by the use of the corresponding procedure for removing, stacking and returning hatch covers, as defined in claim 3.

### Brief Description of the Drawings

The invention will be described below with reference to the accompanying drawings, in which:

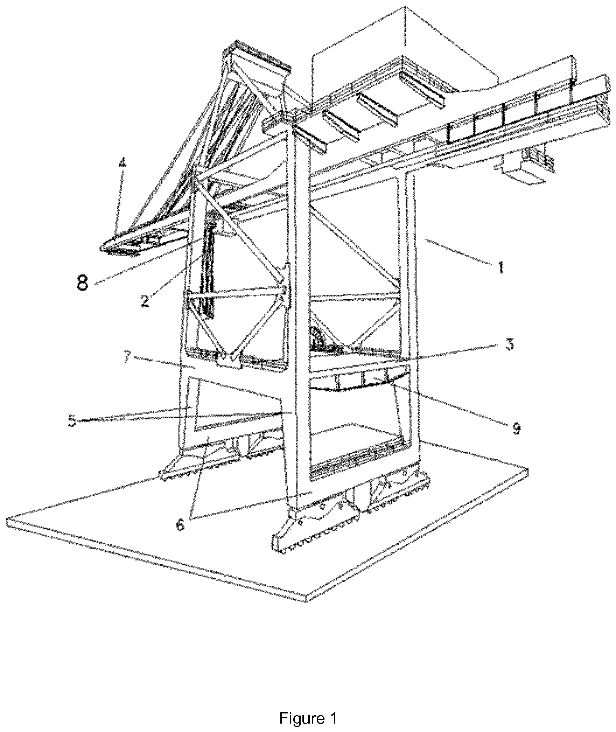

Figure 1 shows a side-rear view of the system of the present invention.

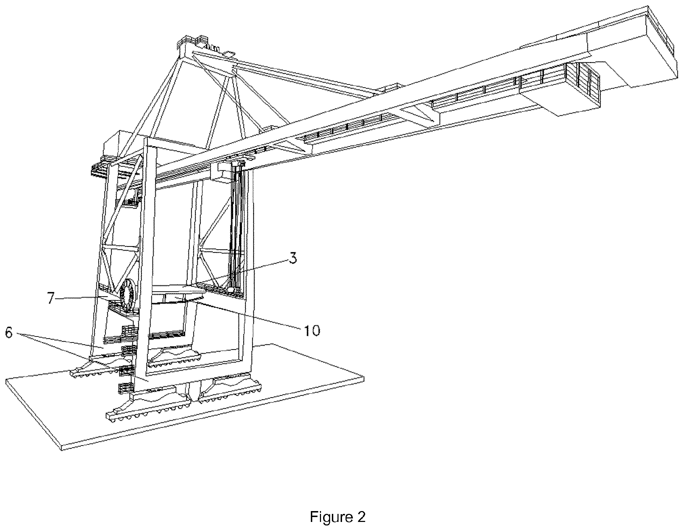

Figure 2 shows a side-front view of the system of the present invention.

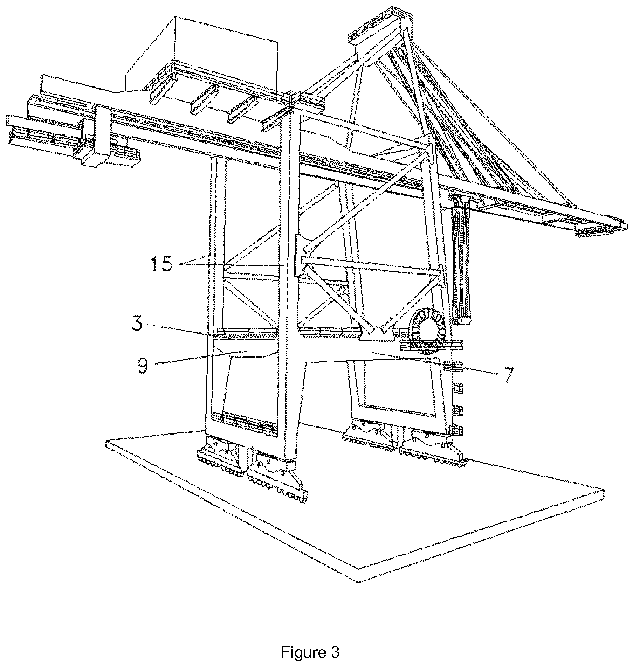

Figure 3 shows a side-rear view for the other side of the system of the present invention.

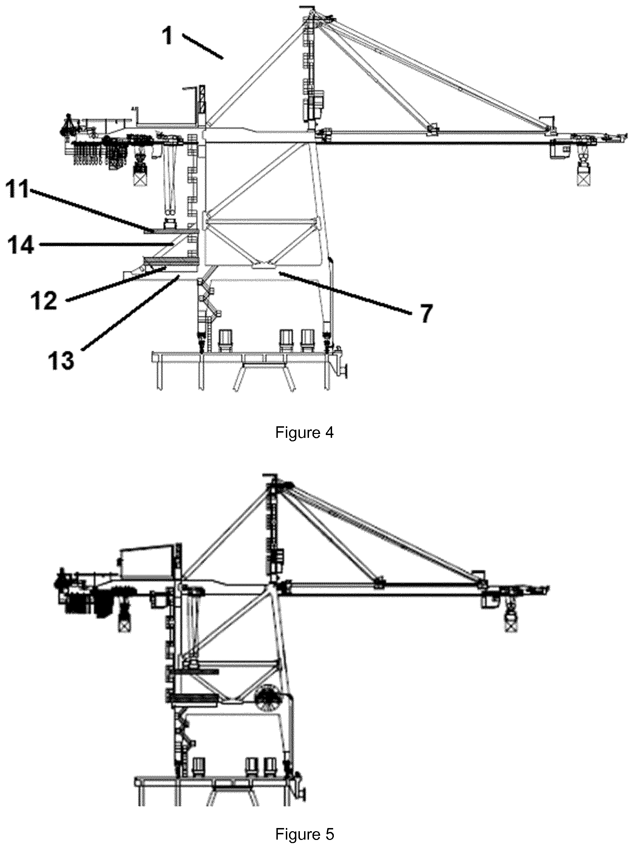

Figure 4 shows a side view of the outer platform option of the system of the present invention.
Figure 5 shows a side view of figure 1.

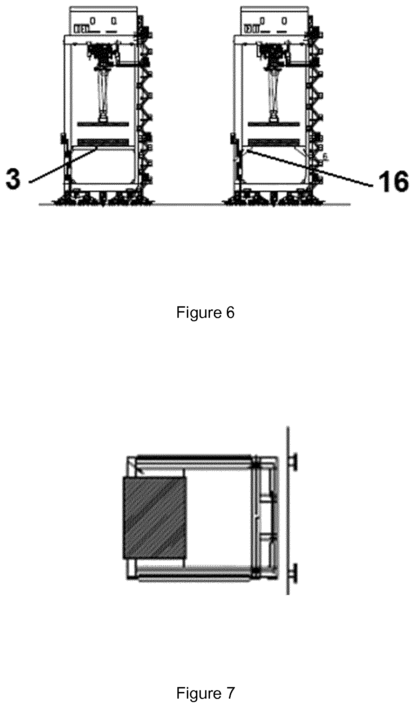

Figure 6 shows a front view of the system with platform or with one support.
Figure 7 shows a top view of the system of the present invention with stacked covers.

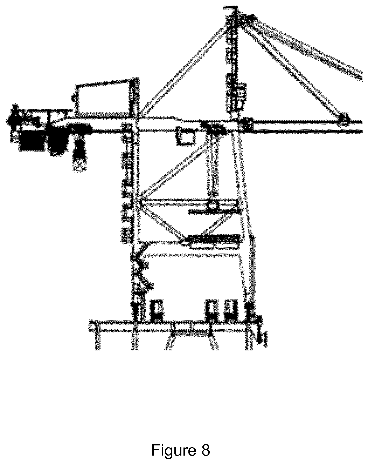

Figure 8 shows another side view of the system of the present invention.

### Detailed Description of the Invention

The present invention corresponds to a system (1) for loading, unloading in port operations and for supporting hatch covers (11) comprising a crane (2) for loading and unloading of maritime operations and a base to be located in the body of the crane for holding and stacking the hatch covers.

The crane (2) for loading and unloading in port operations corresponds to a gantry crane that has an elevated bridge (4) or a gantry supported by two legs (5) by way of an angled arch (15) formed by two verticals profiles, wherein each leg terminates in a horizontal profile base (6); in the bottom half of the legs two lateral horizontal beams are located (7), one on each side of the body of the crane, which links both legs of the crane on their lateral sides, allowing the crane to have free movement of jib trolley (8) in the front and back direction of the crane.

The base to be placed in the body of the crane can be a platform with supports (3, 12) or only a cover support (16, 13) said base is of a resistant material, preferably metal and is strongly adhered to the lateral horizontal beams (7) and / or to the verticals profiles of the legs of the crane, either joined by welding and / or bolted. The installation of the base in the crane (2) may be made on the inside of the body of the crane between its legs or on the outside of the body of the crane as a horizontal extension.

The installation of the platform (3) on the inside of the body of the crane comprises installing small supports attached strongly to the lateral horizontal beams (7) of the crane; a rear horizontal beam (9) attached to the vertical profiles of the rear leg; a front horizontal beam (10) attached to the lateral horizontal beams; and a platform (3) placed on the supports and the front and rear horizontal beams (10.9), tightly bound. The installation of the outer platform (12) on the outside of the body of the crane comprises installing supports attached to the vertical profiles of the legs of the crane and a platform on said supports, also includes some higher tensors (14) attached to the top of the crane. The installation of the supports (16) on the inside of the body of the crane comprises placing supports attached to the lateral horizontal profiles where such supports are of an adequate size and sufficient to support the weight of the hatch covers (11). The installation of the outer cover support (13) on the outside of the body of the crane comprises only installing supports attached to the vertical profiles of the legs of the crane, also including some higher tensors (14) attached to the top of the crane.

The distance between the legs of the crane is about 17 meters and the size of the hatch covers is about 12 to 13 meters, so the size of the platform (3) or the outer platform (12) or the support (16) or the outer cover support (13) has a length of about 14 to less than 17 meters and a width of approximately 10 to 14 meters. The thickness of the inner or outer platform is in the range of 1.20 meters to less than 30 cm.

Optionally the platform (3) or support (16) contains flanges or wedges to make the operation safer.

The procedure of removing, stacking and returning of the hatch covers to the ship comprises:
1. having a system (1) of loading, unloading and supporting hatch covers (11);
2. removing the hatch cover from the hold of the maritime vessel and moving it with the trolley (8) of the crane (2);
3. moving the cover and placing it on the installed base in the body of the crane;
4. once the operation of loading and / or unloading of the crane is over returning the cover to the ship moving it from the said base to the ship.

## Claims

1. System (1) for loading and unloading in port operations and supporting hatch covers (11) of holds of maritime vessels, WHEREIN it comprises:
a) a crane (2) for loading and unloading of maritime operations, wherein the crane has horizontal lateral beams (7) one on each side of a body of the crane and two legs (5) with angled shaped arch, each formed by two verticals profiles (15) and a horizontal profile base (6); and
b) a base located in the body of the crane to hold and stack hatch covers (11),
**characterized in that** the base is an inner or an outer cover support (16, 13), wherein
the inner cover support (16) is installed on an inside of the body of the crane (2) and is formed by supports attached to the lateral horizontal beams (7), the supports being of an adequate and sufficient size to support the weight of the hatch covers, or
the outer cover support (13) is installed on an outside of the body of the crane (2) and is formed by supports attached to the vertical profiles (15) of the legs of the crane; and further comprising some higher tensors (14) attached to a top of the crane, wherein the supports are of an adequate and sufficient size to support the weight of the hatch covers.

2. System (1) for loading and unloading in port operations and supporting hatch covers of holds of maritime vessels according to claim 1, WHEREIN in the body of the crane is installed a rear horizontal beam (9) attached to the vertical profiles (15) of the rear leg and a front horizontal beam (10) attached to the lateral horizontal beams (7).

3. Procedure for removing, stacking and returning hatch covers in a system (1) for loading and unloading in port operations and supporting hatch covers of holds of maritime vessels according to any of claims 1 or 2, WHEREIN it comprises of:
I) having a system (1) for loading and unloading and supporting hatch covers which comprises:
a) a crane (2) for loading and unloading in port operations; and
II) a base located in the body of the crane to hold and stack the hatch covers;
III) removing the hatch cover from the hold of the maritime vessel and moving it with a trolley (8) of the crane;
IV) moving the cover (11) and placing it on the installed base in the body of the crane (2); and
V) returning the cover (11) to the ship moving it from the said base to the ship, once the operation of loading and / or unloading is over.

## Patentansprüche

1. System (1) zum Beladen und Entladen während eines Hafenbetriebs und zum Halten von Lukendeckeln (11) von Laderäumen von Seefahrzeugen, wobei es folgendes umfasst:
a) ein Kran (2) zum Beladen und Entladen bei Schiffsoperationen, wobei das Kran horizontale seitliche Balken (7), einen jeweils auf jeder Seite eines Körpers des Krans, und zwei Füße (5) mit einem winkelförmigen Bogen hat, die jeweils durch zwei vertikale Profile (15) und eine horizontale Profilbasis (6) gebildet sind; und
b) eine im Körper des Krans vorhandene Basis, um Lukendeckel (11) zu halten und zu stapeln,
**dadurch gekennzeichnet, dass** die Basis eine innere oder eine äußere Deckelstütze (16, 13) ist, wobei
die innere Deckelstütze (16) auf einer Innenseite des Körpers des Krans (2) montiert ist und durch an den seitlichen horizontalen Balken (7) befestigte Stützen gebildet ist, wobei die Größe der Stützen angemessen ist und ausreicht, um das Gewicht der Lukendeckel zu halten,
wobei die äußere Deckelstütze (13) auf einer Außenseite des Körpers des Krans (2) montiert ist und durch an den vertikalen Profilen (15) der Füße des Krans befestigte Stützen gebildet ist; und weiterhin umfassend etliche an einem Oberteil des Krans befestigte höhere Spanner (14), wobei die Größe der Stützen angemessen ist und ausreicht, um das Gewicht der Lukendeckel zu halten.

2. System (1) zum Beladen und Entladen während eines Hafenbetriebs und zum Halten von Lukendeckeln von Laderäumen von Seefahrzeugen nach Anspruch 1, wobei ein hinterer horizontaler Balken (9) im Körper des Krans montiert ist, der an den vertikalen Profilen (15) des hinteren Fußes befestigt ist und ein vorderer horizontaler Balken (10) montiert ist, der an den seitlichen horizontalen Balken (7) befestigt ist.

3. Verfahren zum Entfernen, Stapeln und Zurückbringen von Lukendeckeln in einem System (1) zum Beladen und Entladen während eines Hafenbetriebs und zum Halten von Lukendeckeln von Laderäumen von Seefahrzeugen nach einem der Ansprüche 1 oder 2, wobei es folgendes umfasst:
I) bereitstellen von einem System (1) zum Beladen und Entladen und zum Halten von Lukendeckeln, welches folgendes umfasst:
a) ein Kran (2) zum Beladen und Entladen während eines Hafenbetriebs; und
II) eine im Körper des Krans vorhandene Basis, um die Lukendeckel zu halten und zu stapeln,
III) entfernen des Lukendeckels aus dem Laderaum des Seefahrzeugs und bewegen dessen mittels einer Laufkatze (8) des Krans;
IV) bewegen des Deckels (11) und anordnen dessen auf der montierten Basis im Körper des Krans (2); und
V) zurückbringen des Deckels (11) zum Schiff, indem er von der Basis bis zum Schiff bewogen wird, einmal der Betrieb des Beladens bzw. des Entladens beendet ist.

## Revendications

1. Système (1) pour charger et décharger lors d'opérations portuaires et supporter des panneaux (11) de cale de navires, comprenant:
a) une grue (2) pour charger et décharger lors d'opérations maritimes, dans lequel la grue a des poutres latérales horizontales (7), une sur chaque côté d'un corps de la grue et deux pieds (5) ayant un arc en forme d'angle, formés chacun par deux profils verticaux (15) et une base à profil horizontal (6); et
b) une base située dans le corps de la grue pour maintenir et empiler des panneaux (11),
**caractérisé en ce que** la base est un support intérieur ou un support extérieur de panneau (16, 13), dans lequel
le support de panneau intérieur (16) est installé sur un côté intérieur du corps de la grue (2) et il est formé par des supports attachés aux poutres horizontales latérales (7), les supports ayant une dimension appropriée et suffisante pour supporter le poids des panneaux, ou
le support de panneau extérieur (13) est installé sur un côté extérieur du corps de la grue (2) et il est formé par des supports attachés aux profils verticaux (15) des pieds de la grue; et comprenant en outre quelques tenseurs supérieurs (14) attachés à une partie supérieure de la grue, dans lequel les supports ont une dimension appropriée et suffisante pour supporter le poids des panneaux.

2. Système (1) pour charger et décharger lors d'opérations portuaires et supporter des panneaux de cale de navires selon la revendication 1, dans lequel dans le corps de la grue une poutre horizontale arrière (9) attachée aux profils verticaux (15) du pied arrière et une poutre horizontale avant (10) attachée aux poutres horizontales latérales (7) sont installées.

3. Procédé pour enlever, empiler ou retourner des panneaux dans un système (1) pour charger et décharger lors d'opérations portuaires et supporter des panneaux de cale de navires selon l'une quelconque des revendications 1 ou 2, dans lequel il comprend:
I) avoir un système (1) pour charger et décharger et supporter des panneaux qui comprend:
a) une grue (2) pour charger et décharger lors d'opérations portuaires; et
II) une base située dans le corps de la grue pour maintenir et empiler les panneaux;
III) enlever le panneau de la cale du navire et le déplacer avec un chariot (8) de la grue;
IV) déplacer le couvercle (11) et le situer sur la base installée dans le corps de la grue (2); et
V) retourner le couvercle (11) au navire en le déplaçant de ladite base au navire, un fois finie l'opération de charge et / ou décharge.
